(19) Europäisches Patentamt
European Patent Office
Office européen des brevets

(11) **EP 3 735 494 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **19705957.9**

(22) Anmeldetag: **15.02.2019**

(51) Int Cl.:
*E02F 3/18* *(2006.01)*          *B65G 43/08* *(2006.01)*
*B65G 65/20* *(2006.01)*          *E02F 3/26* *(2006.01)*

(86) Internationale Anmeldenummer:
**PCT/EP2019/053790**

(87) Internationale Veröffentlichungsnummer:
**WO 2019/162201 (29.08.2019 Gazette 2019/35)**

(54) **SCHAUFELRADBAGGER UND VERFAHREN ZUM STEUERN EINES SCHAUFELRADBAGGERS**

BUCKET-WHEEL EXCAVATOR AND METHOD FOR CONTROLLING A BUCKET WHEEL EXCAVATOR

EXCAVATRICE À GODETS ET PROCÉDÉ POUR COMMANDER UNE EXCAVATRICE À GODETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2018 DE 102018104153**
            **20.04.2018 DE 102018109498**

(43) Veröffentlichungstag der Anmeldung:
**11.11.2020 Patentblatt 2020/46**

(73) Patentinhaber: **Liebherr-Components Biberach GmbH**
**88400 Biberach an der Riß (DE)**

(72) Erfinder:
• **GRANER, Klaus**
**88400 Biberach an der Riß (DE)**
• **SUHM, Phillipp**
**88400 Biberach an der Riß (DE)**
• **SCHULZE, Thomas**
**88400 Biberach an der Riß (DE)**
• **HESS, Georg**
**88441 Mittelbiberach (DE)**

(74) Vertreter: **Thoma, Michael**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-A1- 0 412 399          WO-A1-2014/040137
DE-C2- 19 726 554          JP-A- S5 598 029

EP 3 735 494 B1

**Beschreibung**

Die vorliegende Erfindung betrifft einen Schaufelradbagger, dessen Schaufelrad rotierend antreibbar und an einem verschwenkbaren Schaufelradausleger gelagert ist, sowie ein Verfahren zum Steuern eines solchen Schaufelradbaggers.

Einen solchen Schaufelradbagger zeigt die Schrift EP 0 412 399 A1, bei dem das rotierende Schaufelrad mittels eines Schaufelradausleger-Schwenkantriebs mit einer Winkelgeschwindigkeit über einen Schwenkwinkel verschwenkt wird und dabei abgetragenes Material auf einem Abförderer ablegt.

Bei solchen Schaufelradbaggern, wie sie beispielsweise auch aus der DE 197 26 554 C2, JP S55 98029 A oder der WO 2014/040137 A1 bekannt sind, wird das im Arbeitsbetrieb rotierende Schaufelrad zusätzlich verschwenkt, um durch die sukzessive zum Einsatz kommenden Schaufeln eine Materialterrasse bogenförmig abzuräumen. Hierzu kann das genannte Schaufelrad um eine liegende Schaufelradachse rotatorisch angetrieben und an einem Schaufelradausleger gelagert sein, der selbst um eine aufrechte Drehachse verschwenkbar ist. Der genannte Schaufelradausleger ist dabei regelmäßig an einem Oberwagen angebracht, der durch einen Unterwagen beispielsweise mit Raupenfahrwerk verfahrbar ist und gegenüber dem genannten Unterwagen verschwenkt werden kann. Das vom Schaufelrad bzw. dessen Schaufeln aufgenommene, abgetragene Material wird dabei auf einen Abförderer übergeben, der ein auf dem verschwenkbaren Ausleger angeordnetes Auslegerförderband aufweisen kann, um das Material vom Schaufelrad Richtung Oberwagen abzufördern. Dort kann das Material beispielsweise über eine Schurre auf einen weiteren Abförderer beispielsweise in Form eines Verladeförderbands übergeben werden.

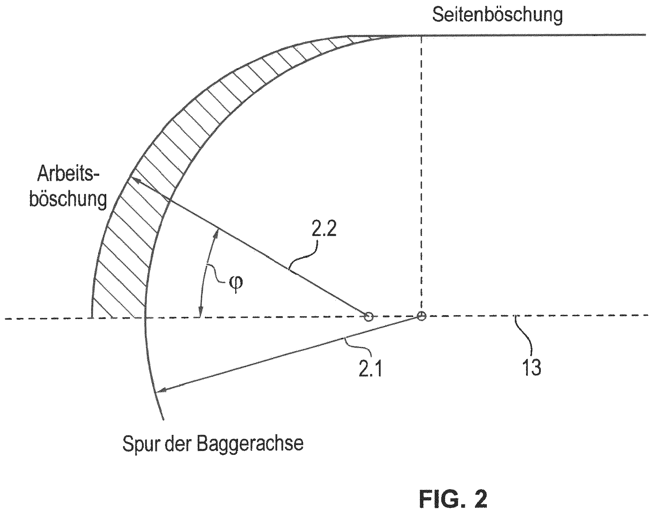

Dabei ist es nicht ganz einfach, auf dem Abförderer einen zumindest einigermaßen konstanten Massen- bzw. Volumenstrom zu erzielen. Das Schaufelrad beschreibt beim Verschwenken des Auslegers eine Kreisbahn. Da jedoch im Anschluss an einen Verschwenkzyklus ein Vorschub erfolgt, beispielsweise durch Verfahren des Schaufelradbaggers über das Raupenfahrwerk in Richtung der Baggerlängsachse, ergibt sich beim anschließenden erneuten Verschwenken des Schaufelrads ein Sichelschnitt, bei dem die Spandicke in Richtung der Baggerachse ein Maximum aufweist und zur Seitenböschung hin immer mehr abnimmt, d.h. beim Ausschwenken des Schaufelrads in Richtung der Seitenböschung nehmen die Schaufeln immer weniger Material mit, wie dies beispielsweise Fig. 2 verdeutlicht. Wird das Schaufelrad dabei mit konstanter Winkelgeschwindigkeit des Auslegers verschwenkt, nimmt der Materialstrom immer mehr ab und bricht bei Erreichen der Seitenböschung mehr oder minder gänzlich ein.

Um den Materialstrom zu vergleichmäßigen, wurde bereits angedacht, die Schwenkwinkelgeschwindigkeit nicht gleichmäßig zu steuern, sondern über den Schwenkwinkel zu variieren. Insbesondere wurde bereits eine sog. cos φ-Steuerung angedacht, welche die Schwenkwinkelgeschwindigkeit mit dem Faktor 1/cos φ erhöht, d.h. zur Seitenböschung hin immer stärker erhöht. Unter der Annahme einer konstanten Materialhöhe über den Schwenk kann in guter Näherung davon ausgegangen werden, dass die Spandicke, d.h. die Sichelfläche und damit - bei konstanter Materialhöhe - die Abraummenge zur Seitenböschung hin cosinus-artig abnimmt, so dass durch eine Erhöhung der Schwenkwinkelgeschwindigkeit mit 1/cos φ ein nahezu konstanter Materialstrom erhalten werden kann.

In der Praxis ergeben sich jedoch signifikante Abweichungen von einem solchen Cosinus-Modell, die im Ergebnis zu einem keineswegs gleichmäßigen Massen- bzw. Volumenstrom auf dem Abförderer führen, wenn eine solche cos φ-Steuerung implementiert ist. Zum einen kann die oberste Terrasse Variationen bezüglich der Materialhöhe aufweisen, infolge derer auch der Materialstrom über den Schwenk entsprechend variiert.

Zudem tritt systembedingt eine Totzeit auf, die einen zeitlichen Versatz zwischen dem Ablösen des Materials durch das Schaufelrad und dem Auftreten des korrespondierenden Materialstroms auf dem Abförderer mit sich bringt. Die genannte Totzeit ist dabei die Zeit vom Lösen des Materials einer Schaufel bis hin zum Auftreffen des Materials an einer Stelle des Abförderers, an dem das Material sensorisch erfasst werden kann, was eine tatsächliche Regelung mit Berücksichtigung des tatsächlichen Materialstroms schwierig macht. Durch die Dimension des Schaufelradbaggers und die regelmäßig langsame Rotationsgeschwindigkeit des Schaufelrads sind Totzeiten im zweistelligen Sekundenbereich möglich, wodurch klassische Regelungsmethoden scheitern.

Ferner sind auch detailliertere Regelungsmodelle in der Praxis kaum erstellbar, da Störgrößeneinflüsse auf sensorisch erfassbare Regelgrößen (Drehmomente und Geschwindigkeiten der Antriebe) und/oder die Regelstrecke nur unzureichend erfasst und demzufolge nicht kompensiert werden können. Solche Störgrößen sind beispielsweise gegen das Schaufelrad und den Ausleger drückender Wind oder eine Neigung am Schwenkwerk. Ferner ist zu beachten, dass die Materialmasse relativ zur Schnittkraft am Schaufelrad einen nur relativ geringen Einfluss besitzt.

Insofern obliegt es in der Praxis bis heute oftmals dem Maschinenführer, durch feinfühlige, händische Steuerung einen einigermaßen gleichmäßigen Materialstrom auf dem Abförderer sicherzustellen. Regelmäßig kann der Bediener selbständig die Geschwindigkeit des Schwenkwerks einstellen und variieren, um die Bandbefüllung konstant zu halten, was bei aufmerksamer Beobachtung der Schaufelfüllung während des Schnitts an sich gut abgeschätzt werden kann, jedoch einen sehr erfahrenen Maschinenführer voraussetzt. Eine solche händische Korrektur kann auch in Verbindung mit der vorgenannten cos φ-Steuerung erfolgen, wobei hier

dann die cos φ-Steuerung sozusagen eine Grundsteuerung bildet und die Schwenkwinkelgeschwindigkeit über den Schwenkwinkel vorgibt, die vom Maschinenführer hiervon abweichend jedoch korrigiert werden kann.

Ferner wurde bereits angedacht, eine Leistungsregelung vorzusehen, bei der die Auslastung des Schaufelradantriebs konstant gehalten wird. Hierdurch arbeitet der Schaufelradbagger an sich permanent an seiner Leistungsgrenze, was je nach Gesteinsfestigkeit jedoch zu einem sehr hohen Materialstrom führen kann und dementsprechend eine Überbeladung des Abförderers zur Folge haben kann. Auch wenn der Abförderer per se den Materialstrom noch bewältigen kann, können sich nachgeordnete Probleme ergeben, wenn die nachfolgenden Anlagen im Hintergrund einen derartigen Materialstrom nicht verarbeiten können oder ein maximaler Materialstrom gar nicht benötigt wird.

Der vorliegenden Erfindung liegt daher die Aufgabe zugrunde, einen verbesserten Schaufelradbagger und ein verbessertes Verfahren zu dessen Steuerung zu schaffen, um Nachteile des Standes der Technik zu vermeiden und Letzteren in vorteilhafter Weise weiterzubilden. Insbesondere soll eine verbesserte Steuerung geschaffen werden, die ein einfaches Einstellen des gewünschten Sollmassen- bzw. -volumenstroms zwischen null und maximal erlaubt und diesen auch bei variabler Materialhöhe über den Schwenk möglichst konstant einhält, ohne hierfür eine komplex ausgebildete Sensorik und ein kompliziertes Regelungsmodell zu benötigen und ohne hierbei eine Überfüllung des Abförderers bei stärker variierenden Materialparametern zu riskieren.

Erfindungsgemäß wird die genannte Aufgabe durch ein Verfahren gemäß Anspruch 1 sowie einen Schaufelradbagger gemäß Anspruch 5 gelöst. Bevorzugte Ausgestaltungen der Erfindung sind Gegenstand der abhängigen Ansprüche.

Es wird also vorgeschlagen, die Schwenkwinkelgeschwindigkeit unter Berücksichtigung eines sich bei einem vorherigen Schwenkzyklus mit bekannter Schwenkgeschwindigkeit und Vorschubweg einstellenden Materialstroms zu steuern, um einen gewünschten Materialstrom zu erzielen. Der vorherige Schwenkzyklus wird hierzu aufgezeichnet und der über den Schwenkwinkel bei bekannter Schwenkwinkelgeschwindigkeit und bekanntem Vorschub anfallende Materialstrom und der bekannte Vorschub dazu genutzt, die Schwenkwinkelgeschwindigkeit für den neuerlichen Schwenkzyklus zu kalibrieren, um den gewünschten Materialstrom zu erzielen. Erfindungsgemäß wird bei vorgegebener Schwenkwinkelgeschwindigkeit ein sich nach einem bestimmten Vorschub beim Verschwenken des Schaufelrads mit der vorbestimmten Schwenkwinkelgeschwindigkeit auf dem Abförderer einstellender Massen- und/oder Volumenstrom über dem Schwenkwinkel bestimmt, ein gewünschter Massen-und/oder Volumenstrom auf dem Abförderer vorgegeben und sodann die vormals vorgegebene Schwenkwinkelgeschwindigkeit anhand des bestimmten Massen-und/oder Volumenstroms, des bestimmten Vorschubwegs und des vorgegebenen gewünschten Massen- und/oder Volumenstroms automatisch korrigiert, um den Schwenkzyklus dann mit der korrigierten Schwenkwinkelgeschwindigkeit des Schaufelrads auszuführen.

Die zunächst vorgegebene Schwenkwinkelgeschwindigkeit kann grundsätzlich in verschiedener Weise vorgegeben werden. Beispielsweise kann ein Schwenkzyklus mit konstanter Schwenkwinkelgeschwindigkeit gefahren und dabei der sich einstellende Materialstrom aufgezeichnet werden (der dann in diesem Fall zur Seitenböschung hin immer stärker einbrechen wird). Um die Schwenkwinkelgeschwindigkeit für einen späteren Schwenkzyklus so zu korrigieren, dass ein gewünschter, insbesondere konstanter Materialstrom erzielt wird, kann die konstante, vormals vorgegebene Schwenkwinkelgeschwindigkeit mit dem Verhältnis aus Sollmaterialstrom zu Istmaterialstrom und dem Verhältnis der Vorschubwege korrigiert werden. Unter der vorgenannten Annahme, dass bei konstanter Schwenkwinkelgeschwindigkeit der Materialstrom mit zunehmendem Schwenkwinkel immer stärker abnimmt, führt dies zu einer immer stärkeren Erhöhung der Schwenkwinkelgeschwindigkeit mit zunehmendem Schwenkwinkel.

Alternativ oder zusätzlich zu der zuvor beschriebenen Vorgehensweise kann der Vorgabe der Schwenkwinkelgeschwindigkeit auch eine kontinuierliche Regelung überlagert werden. Bei einer solchen Regelung können der gemessene Massenstrom und der vorgegebene Massenstrom während eines jeden Schwenks miteinander verglichen werden und die Schwenkwinkelgeschwindigkeit bereits während eines jeden Schwenks angepasst werden.

Die zunächst vorgegebene Schwenkwinkelgeschwindigkeit kann aber selbst bereits eine winkelabhängige Funktion sein, beispielsweise einen cosinus-abhängigen Verlauf haben, beispielsweise im Sinne von 1/cos φ. Unter optimalen Bedingungen würde dies an sich bei einem Sichelschnitt bereits einen konstanten Materialstrom bewirken. Ergeben sich allerdings durch beispielsweise variierende Materialbeschaffenheiten oder -höhen Schwankungen im Materialstrom, wird der vormals vorgegebene, cosinus-abhängige Schwenkwinkelgeschwindigkeitsverlauf in entsprechender Weise kalibriert, indem der Sollmaterialstrom zum tatsächlich gemessenen Materialstrom unter Berücksichtigung des Vorschubwegs ins Verhältnis gesetzt wird. Hierdurch wird der Cosinus-Verlauf korrigiert.

Insbesondere kann die Korrektur der Schwenkwinkelgeschwindigkeit anhand folgender Beziehung vorgenommen werden:

$$\omega_{soll} = \omega_{ist} \cdot \frac{m_{soll}}{m_{ist}} \cdot \frac{s_{n-1}}{s_n},$$

wobei $\omega_{soll}$ die Soll-Schwenkwinkelgeschwindigkeit, $\omega_{ist}$ die vormals vorgegebene Schwenkwinkelgeschwindigkeit, $m_{soll}$ der Sollmaterialstrom, $m_{ist}$ der gemessene Istmaterialstrom, $s_n$ der Vorschub vor dem Schwenk, und $s_{n-1}$ der Vorschub vor dem vormaligen Schwenk ist, wobei durch die schwenkwinkelbezogene Aufzeichnung des Materialstroms ein schwenkwinkelabhängiger Sollverlauf für die besagte Schwenkwinkelgeschwindigkeit erhalten wird.

Wird bereits die vormals vorgegebene Schwenkwinkelgeschwindigkeit $\omega_{ist}(\varphi)$ als Verlauf bzw. Funktion in Abhängigkeit des Schwenkwinkels $\varphi$ vorgegeben, kann analog vorgegangen werden:

$$\omega_{soll}(\varphi) = \omega_{ist}(\varphi) \cdot \frac{m_{soll}(\varphi)}{m_{ist}(\varphi)} \cdot \frac{s_{n-1}}{s_n}.$$

Als Materialstrom kann dabei ein Massestrom vorgegeben und entsprechend gemessen werden, insbesondere durch einen Gewichtssensor, der an dem Abförderer angeordnet sein kann, um das dort abgeladene Material zu wiegen.

Alternativ oder zusätzlich kann aber auch der auf dem Abförderer abgelegte bzw. entstehende Volumenstrom gemessen werden, indem das dort abgeladene Material volumenmäßig erfasst wird. Hierzu können verschiedene Sensoren Verwendung finden, mittels derer die Oberfläche bzw. Oberflächenkontur des Materialstroms auf dem Abladeförderer bestimmt werden kann. Dies können beispielsweise Radarsensoren, Ultraschallsensoren, Lichtschnitt- und/oder Lasersensoren sein, mittels derer sich die Oberflächenkontur abtasten und bestimmen und daraus die Querschnittsfläche des Materialstroms bestimmen lässt.

Werden sowohl der Massenstrom als auch der Volumenstrom sensorisch erfasst, erlaubt dies auch eine Bestimmung der Dichte des abgeräumten Materials, was für die weitere Verarbeitung des Materials von Vorteil sein kann.

Um den Zusammenhang zwischen Schwenkwinkel und erzeugtem Materialstrom nicht durch die Totzeit des Schaufelradbaggers zu verfälschen, wird in vorteilhafter Weiterbildung der Erfindung der aufgezeichnete Zusammenhang zwischen gemessenem Materialstrom und gemessenem Schwenkwinkel um die besagte Totzeit korrigiert.

Insbesondere kann zum Bestimmen des sich auf dem Abförderer einstellenden Masse- und/oder Volumenstroms über dem Schwenkwinkel der tatsächlich auf dem Abförderer vorliegende Massen- und/oder Volumenstrom durch eine Massen-und/oder Volumensensoreinrichtung relativ zum Schwenkwinkel des Schaufelradauslegers erfasst werden, eine Totzeit zwischen einem Lösen des Materials an einer Schaufel bis zum Messen dieses gelösten Materials auf dem Abförderer bestimmt werden, und schließlich unter Berücksichtigung der Schwenkwinkelgeschwindigkeit die Zuordnung zwischen gemessenem Massen-und/oder Volumenstrom zum Schwenkwinkel um die bestimmte Totzeit korrigiert werden. Eine solche Totzeitkorrektur trägt dem Umstand Rechnung, dass an einer Schaufel gelöstes Material nicht unmittelbar die Sensoreinrichtung zum Erfassen des Massen- und/oder Volumenstroms passieren kann, sondern dorthin eine gewisse Zeitspanne, die mehrere Sekunden betragen kann, benötigt.

Die Totzeit kann dabei in grundsätzlich verschiedener Weise bestimmt werden, insbesondere indem Betriebsgrößen des Schaufelradbaggers auf Charakteristika hin überwacht werden, die mit den maßgeblichen Zeitpunkten für die Bestimmung der Totzeit einhergehen, d.h. dem Lösen des Materials einer Schaufel und der Messzeitpunkt bei der Messung des Massen- bzw. Volumenstroms. Insbesondere kann zum Bestimmen der Totzeit ein Zeitversatz zwischen einer Laständerung und/oder einer Änderung der Schaufelraddrehgeschwindigkeit einerseits und einer Signaländerung der Massen- und/oder Volumenstromsensoreinrichtung anderseits bestimmt werden. Dies geht von der Überlegung aus, dass beim Lösen des Materials durch eine Schaufel durch den dabei auftretenden Widerstand die Lastaufnahme des Schaufelradantriebs - also beispielsweise die Stromaufnahme oder die hydraulische Leistungsaufnahme - ansteigt und/oder die Schaufelraddrehgeschwindigkeit zumindest kurzfristig abfällt, so dass der Zeitpunkt des Lösens des Materials dadurch bestimmt werden kann, dass ein entsprechender Anstieg des Energiebedarfs oder Drehzahlabfall bestimmt wird. Andererseits wird sich das Signal der Massenstrom- und/oder Volumenstrom-Sensoreinrichtung signifikant ändern, wenn auf dem Abförderer der Materialstrom einsetzt. Alternativ oder zusätzlich kann die Totzeit auch über die Kenntnis von Geometrie (Schaufelrad, Anschnittwinkel, Strecke bis zur Bandwaage) und über Kinematik (Drehzahl des Schaufelrades, Bandgeschwindigkeit) bestimmt werden.

Die genannte Skalierung der Soll-Schwenkwinkelgeschwindigkeit durch das Verhältnis des Materialstroms und des Vorschubweges, der in einem vormaligen Schwenkzyklus bei bekannter Schwenkwinkelgeschwindigkeit gemessen wurde, zu einem gewünschten Sollmaterialstrom kann grundsätzlich verschieden oft durchgeführt werden. Dabei kann es ausreichend sein, wenn beispielsweise nur der erste Schwenkzyklus bei bekannter Schwenkwinkelgeschwindigkeit und Vorschubweges hinsichtlich des sich einstellenden Materialstroms, d.h. Massen-und/oder Volumenstrom aufgezeichnet wird. Vorteilhafterweise wird dabei nicht der erste Schnitt in eine Terrasse verwendet. Im ersten Schnitt in einer Terrasse ist der bestimmte Vorschubweg aufgrund durch rückwärts und anschließendem Vorwärtsfahren nicht repräsentativ. Erst ab einem vollständigen Schnitt mit Materialabtrag ist der Vorschubweg sinnvoll verwendbar. In vorteilhafter Weiterbildung der Erfindung kann die Skalierung jedoch auch kontinuierlich nachgezogen werden, um sich ändernde Materialeigenschaften bei der Terrassenbearbeitung oder sich ergebende Neigungsänderungen zu berücksichtigen. Beispielsweise kann eine Neuskalierung bzw. Neukalibrierung nach jedem fünften oder jedem dritten oder auch bei jedem Schwenkzyklus stattfinden.

Vorteilhafterweise kann die Steuerung bzw. kann der Schaufelradbagger mit einer an sich bei Schaufelradbaggern üblichen Sensorik auskommen, wobei es beispielsweise ausreichend sein kann, eine Bandwaage am Abförderer vorzusehen, um dort das wirkende Materialgewicht messen und damit den Massenstrom bestimmen zu können, insbesondere wenn dabei die Bandgeschwindigkeit erfasst und/oder konstant vorgegeben wird, wobei ein Bandgeschwindigkeitssensor und/oder ein Fördermotordrehzahlsensor zum Bestimmen der Fördergeschwindigkeit des Abförderers vorgesehen sein kann, ferner dem Schwenkwerk zum Verschwenken des Schaufelradauslegers einen Winkelsensor zuzuordnen, um den Winkel messen zu können, dessen Ableitung gleichzeitig auch als Winkelgeschwindigkeit verwendet werden kann, wobei alternativ auch separat ein Winkelsensor und ein Winkelgeschwindigkeitssensor vorgesehen sein können. Ferner können über eine geeignete Sensorik, beispielsweise einen Strommesser oder einen Drucksensor und einen Drehzahlsensor die Belastung und Drehzahl des Schaufelrads bzw. des Schaufelradmotors gemessen werden, um das Antriebsmoment und die Drehzahl des Schaufelrads bestimmen zu können.

Wird in der genannten Weise alternativ oder zusätzlich zum Massenstrom der Volumenstrom erfasst, kann ein entsprechender Oberflächensensor wie zuvor erläutert vorgesehen sein.

Um eine Überlastung des Schaufelradbaggers und dessen Antriebe zu vermeiden, ist in vorteilhafter Weiterbildung der Erfindung eine Leistungsregelung der vorgenannten Schwenkwinkelgeschwindigkeits-Steuerung überlagert. Droht der Schaufelradbagger bzw. einer seiner Antriebe in den Überlastbereich zu kommen oder wird eine bestimmte Leistungsgrenze erreicht, kann die genannte Leistungsregelung die Schwenkgeschwindigkeit reduzieren, d.h. der Schaufelradausleger wird nicht mit der an sich bestimmten Soll-Schwenkwinkelgeschwindigkeit verschwenkt, sondern nur noch mit einer entsprechend herabgesetzten, reduzierten Sollgeschwindigkeit. Eine Überlagerung der Steuerung mit der Leistungsregelung führt zu einer Begrenzung des Materialstroms im Leistungsgrenzbereich.

Die Erfindung wird nachfolgend anhand eines bevorzugten Ausführungsbeispiels und zugehöriger Zeichnungen näher erläutert. In den Zeichnungen zeigen:

Fig. 1: eine schematische Seitenansicht eines Schaufelradbaggers,

Fig. 2: eine schematische Darstellung des sich bei dem Schaufelradbagger aus Fig. 1 ergebenden Sichelschnitts.

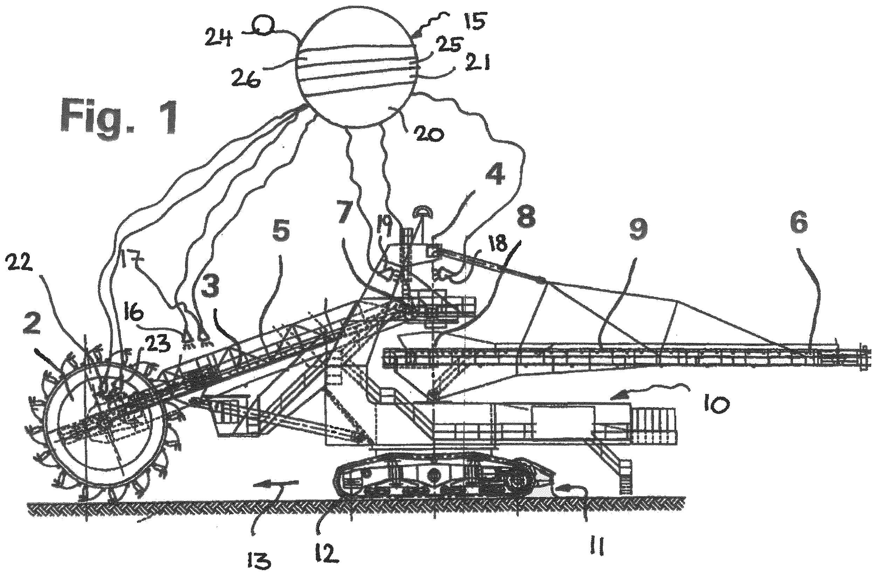

Wie Fig. 1 zeigt, kann der Schaufelradbagger 1 in an sich bekannter Weise ein Schaufelrad 2 aufweisen, das um eine liegende Schaufelradachse rotatorisch antreibbar ist und umfangsseitig Schaufeln aufweisen kann, um Material einer zu bearbeitenden Fläche bzw. Terrasse, insbesondere Erde und/oder Gestein lösen und aufnehmen zu können.

Das genannte Schaufelrad 2 kann an einem Schaufelradausleger 3 in Form eines Auslegers gelagert sein, der um eine aufrechte Schwenkachse 4 schwenkbar an einem Oberwagen 10 angelenkt und durch ein Schwenkwerk mit einem Schwenkantrieb verschwenkt werden kann. Der genannte Schaufelradausleger 3 kann genauer gesagt zusammen mit dem Oberwagen 10 um die besagte aufrechte Schwenkachse 4 gegenüber dem Unterwagen 11 verschwenkt werden, der insbesondere ein Raupenfahrwerk 12 aufweisen kann.

Um das vom Schaufelrad 2 aufgenommene Material abfördern zu können, kann dem genannten Ausleger bzw. Schaufelradausleger 3 ein Abförderer 5 beispielsweise in Form eines endlos umlaufenden Förderbands zugeordnet sein. Der genannte Abförderer 5 fördert das vom Schaufelrad 2 übernommene Material entlang des Auslegers zum Oberwagen 10, wo das abgeförderte Material über eine Schurre 8 auf einen weiteren Abförderer 9 übergeben werden kann, der beispielsweise ebenfalls ein endlos umlaufendes Förderband umfassen und als Verladeförderer ausgebildet sein kann.

Wie Fig. 1 weiterhin zeigt, kann der Schaufelradausleger 3 um eine liegende Querachse 7 wippbar am Oberwagen 10 angelenkt sein.

Fig. 2 verdeutlicht die im Arbeitsbetrieb sich einstellenden Schnittverhältnisse am Schaufelrad 2, wobei der Kreisbogen 2.1 die kreisbogenförmige Schwenkbahn des Schaufelrades 2 in einem ersten Schwenkzyklus n-1 und der Kreisbogen 2.2 die wiederum kreisbogenförmige Bahn des Schaufelrads in einem weiteren Schwenkwertzyklus n illustriert, nachdem der Schaufelradbagger 1 durch Verfahren des Raupenfahrwerks 12 in Längsrichtung des Schaufelradbaggers 1 einen Vorschub erfahren hat. Durch den besagten Vorschub einerseits und die kreisbogenförmige Bahn des Schaufelrads 2 andererseits ergibt sich der in Fig. 2 illustrierte Sichelschnitt, der in Richtung der Baggerlängsachse bzw. des Vorschubs 13 eine maximale Spandicke besitzt, die zur Seitenböschung hin immer kleiner wird.

Dabei kann der Schwenkwinkel des Auslegers bzw. Schaufelradauslegers 3 mit dem Winkel $\varphi$ bezeichnet werden, der üblicherweise $\varphi = 0$ beträgt, wenn der Schaufelradausleger 3 sozusagen neutral in der Mitte entlang der Baggerlängsachse bzw. entlang des Vorschubs 13 steht, und andererseits $(\varphi) = 90°$ beträgt, wenn das Schaufelrad 2 die Seitenböschung erreicht hat. In einem Schwenkzyklus kann das Schaufelrad 2 damit also grundsätzlich in einem Bereich von $-90° \leq \varphi \leq +90°$

verschwenkt werden, wobei aber ggf. auch nur kleinere Schwenkwinkelbereiche von beispielsweise +/-80° oder +/- 70° vorgesehen sein können, wobei aber auch Asymmetrien nach Fig. 2 genauso möglich sind.

Eine Steuervorrichtung 15 des Schaufelradbaggers 1, die eine elektronische Datenverarbeitungseinrichtung beispielsweise umfassend einen Mikroprozessor und in einem Speicher abgelegte Software, kann den Schaufelradbagger 1 insbesondere steuern wie folgt:

Zunächst kann der Schaufelradbagger 1 in einem Kalibrierdurchlauf n-1 mit vorgegebener Schwenkwinkelgeschwindigkeit $\omega_{ist}$ verschwenkt werden, indem das Schwenkwerk entsprechend angesteuert und der Schaufelradausleger 3 um die Achse 4 entsprechend verschwenkt wird. Hierbei läuft das Schaufelrad 2 in an sich bekannter Weise rotatorisch angetrieben, um Material zu lösen und auf dem Abförderer 5 abzuladen. Die vorgegebene Schwenkwinkelgeschwindigkeit $\omega_{ist}$ kann beispielsweise konstant vorgegeben werden oder einen vorbestimmten Cosinus-Verlauf besitzen.

In diesem Schwenkzyklus n-1 wird der sich auf dem Abförderer 5 einstellende Materialstrom sensorisch gemessen, und zwar insbesondere in Form eines Massenstroms und/oder in Form eines Volumenstroms. Hierzu kann dem Abförderer 5 eine Massenstrom-Sensoreinrichtung 16 und/oder eine Volumenstrom-Sensoreinrichtung 17 zugeordnet sein, die die auf dem Abförderer 5 im entsprechenden Abförderabschnitt hindurchgeförderte Masse bzw. das durchgeförderte Volumen bestimmen, sodass das Signal der Massenstromsensoreinrichtung 16 den Massenstrom m und das Signal der Volumenstromsensoreinrichtung 17 den Volumenstrom v angibt.

Bei besagtem Schwenkzyklus n-1 wird gleichzeitig durch einen Winkelsensor 18 und einen Winkelgeschwindigkeitssensor 19, die dem Schwenkwerk zugeordnet sein können, der Schwenkwinkel $\varphi$ und die Schwenkwinkelgeschwindigkeit w des Schaufelradauslegers 3 erfasst.

Die hierdurch erfassten Betriebsgrößen Massenstrom m, Volumenstrom v, Schwenkwinkel $\varphi$ und Schwenkwinkelgeschwindigkeit w werden der Steuervorrichtung 15, insbesondere einer darin implementierten Aufzeichnungseinrichtung 20 zugeführt, um den sich einstellenden Massenstrom und/oder Volumenstrom relativ zum Schwenkwinkel und Schwenkwinkelgeschwindigkeit aufzuzeichnen.

Ferner wird von einer Totzeit-Bestimmungseinrichtung 21 die Totzeit bestimmt, d.h. die Zeitspanne zwischen dem Lösen des Materials einer Baggerschaufel bis zur Erfassung des Materials durch die genannten Massenstrom- und/oder Volumenstromsensoreinrichtungen 16 und 17. Die genannte Totzeitbestimmungseinrichtung 21 kann hierbei einen Lastaufnahmesensor beispielsweise in Form eines Stromaufnahmesensor 22 zum Erfassen der Stromaufnahme des Drehantriebs zum Drehen des Schaufelrads 2 und/oder eines Drucksensors bei hydraulischer Ausbildung des Antriebs, und/oder einen Drehzahlsensor 23 zum Erfassen der Drehzahl des Schaufelrads umfassen. Konkret bestimmt werden kann die genannte Totzeit, indem beispielsweise eine charakteristische Zunahme der Energieaufnahme, beispielsweise der Stromaufnahme oder ein Druckanstieg und/oder ein charakteristischer Abfall der Drehzahl des Schaufelrads 2 bestimmt wird, wobei der Zeitpunkt, zu dem diese Änderung auftritt, als Zeitpunkt des Lösens des Materials gewertet werden kann. Zum anderen wird das Signal der Massenstrom- und/oder Volumenstromsensoreinrichtung 16 bzw. 17 daraufhin überwacht, wann ein bestimmter Anstieg eintritt. Die zeitliche Differenz zwischen dem Auftreten beider Änderungen kann als Totzeit gewertet werden. Die Totzeit T kann aber auch über die Kenntnis von Geometrie (Schaufelrad, Anschnittwinkel, Strecke bis zur Bandwaage) und über Kinematik (Drehzahl des Schaufelrades, Bandgeschwindigkeit) bestimmt werden.

Die Steuervorrichtung 15 kann sodann den im Schwenkzyklus n-1 aufgezeichneten Massenstrom $m_{ist}$ und/oder Volumenstrom $v_{ist}$ über dem Schwenkwinkel $\varphi$ um die besagte Totzeit korrigieren. Vorteilhafterweise kann aus der ebenfalls aufgezeichneten und/oder vorbekannten Schwenkwinkelgeschwindigkeit $\omega_{ist}$ beim Schwenkzyklus n-1 aus der Totzeit der Winkelversatz bestimmt werden, der durch die Totzeit bedingt ist, woraufhin die Steuervorrichtung 15 den Massenstrom und/oder Volumenstrom über dem Schwenkwinkel entsprechend korrigieren kann.

Für einen nächsten Schwenkzyklus n kann die Steuervorrichtung 15 sodann einen gewünschten Materialstrom in Form eines gewünschten Sollmassenstroms $m_{soll}$ und/oder in Form eines gewünschten Volumenmaterialstroms $v_{soll}$ auf dem Abförderer 5 zugrunde legen, wobei die Steuervorrichtung 15 Eingabemittel 24 beispielsweise in Form eines Schiebereglers, eines Drehknopfs, eines Joysticks oder eines Touchscreens aufweisen kann, mittels dessen ein Maschinenführer oder eine Leitstelle den gewünschten Sollmassen- oder Sollvolumenstrom eingeben kann.

Die Steuervorrichtung 15 skaliert bzw. kalibriert die Schwenkwinkelgeschwindigkeit $\omega$ anhand des erfassten Materialstroms und des gewünschten Sollmaterialstroms und des jeweiligen Vorschubwegs. Insbesondere kann eine Skalier- bzw. Kalibriereinrichtung 25, die in der Steuervorrichtung 15 implementiert sein kann, die Sollschwenkwinkel-Geschwindigkeit $\omega_{soll}(\varphi)$ anhand folgender Beziehung bestimmen:

$$\omega_{soll}(\varphi) = \omega_{ist}(\varphi) \; \frac{m_{soll}(\varphi)}{m_{ist}(\varphi)} \; \frac{s_{n-1}}{s_n},$$

wobei $\omega_{soll}(\varphi)$ die Sollschwenkwinkelgeschwindigkeit für den Schwenkzyklus n, $\omega_{ist}(\varphi)$ die vorgegebene

Schwenkwinkelgeschwindigkeit beim Schwenkzyklus n-1 ist, $m_{soll}$ ($\varphi$) die durch die Eingabemittel 24 vorgegebene Sollmassenstrom für den Schwenkzyklus n, $m_{ist}$ der sensorisch gemessene Massenstrom beim Schwenkzyklus n-1, $s_{n-1}$ der vormalige Vorschubweg vor dem Schwenkzyklus n-1 und $s_n$ der Vorschubweg vor dem Schwenkzyklus n ist.

Wird eine Volumenstromsteuerung vorgesehen bzw. soll ein gewünschter Volumenstrom erzielt werden, kann der besagte Skalier- bzw. Kalibrierbaustein 25 anhand folgender Beziehung vorgehen:

$$\omega_{soll}(\varphi) = \omega_{ist}(\varphi) \cdot \frac{v_{soll}(\varphi)}{v_{ist}(\varphi)} \cdot \frac{s_{n-1}}{s_n},$$

wobei $\omega_{soll}$ ($\varphi$) die Solldrehwinkelgeschwindigkeit für den Schwenkzyklus n, $\omega_{ist}$($\varphi$) die Drehwinkelgeschwindigkeit beim vorangegangenen Schwenkzyklus n-1, $v_{soll}$ die eingestellte Soll-Volumenstrom ist, $v_{ist}$ ($\varphi$) der im vorherigen Zyklus n-1 gemessene Volumenstrom, $s_{n-1}$ der vormalige Vorschubweg vor dem Schwenkzyklus n-1 und $s_n$ der Vorschubweg vordem Schwenkzyklus n ist.

Der Soll-Massenstrom $m_{soll}$ bzw. der Soll-Volumenstrom $v_{soll}$ werden vorteilhafterweise konstant gewünscht und daher nicht als Funktion vom Schwenkwinkel $\varphi$ vorgegeben, obwohl dies gleichwohl möglich wäre.

Vorteilhafterweise umfasst die Steuervorrichtung 15 weiterhin einen Leistungsbegrenzer 26, der der Steuerung der Schwenkwinkelgeschwindigkeit überlagert ist und die wie zuvor erläuterte, bestimmte Soll-Schwenkwinkelgeschwindigkeit begrenzt bzw. herabsetzt, wenn die Antriebe des Schaufelradbaggers 1 in den Überlastbereich zu geraten drohen und/oder auf dem Abförderer 5 eine zu große Materialmenge abgeladen zu werden droht. Der genannte Leistungsbegrenzer 26 kann über entsprechende Sensoreinrichtungen die Leistungsaufnahme der Antriebe überwachen und/oder die Signale der Massenstrom- und/oder Volumenstromsensoren 16 und 17 als Eingangsgrößen überwachen und auf Basis dieser Eingangsgrößen die Schwenkwinkelgeschwindigkeit begrenzen bzw. reduzieren.

**Patentansprüche**

1. Verfahren zum Steuern eines Schaufelradbaggers (1), dessen mit vorzugsweise konstanter Drehzahl rotierendes Schaufelrad (2) mittels eines Schaufelradausleger-Schwenkantriebs mit einer Winkelgeschwindigkeit ($\omega$) über einen Schwenkwinkel ($\varphi$) verschwenkt wird und dabei abgetragenes Material auf einem Abförderer (5) ablegt, mit folgenden Schritten:

    - nach Abschluss eines Schwenks über den Schwenkwinkel ($\varphi$) mit Materialabtrag Vor-schubbewegung des Schaufelradbaggers mittels dessen Fahrwerks zum abzutragenden Gebirge hin mit Erfassung des realisierten Vorschubweges ($s_n$)
    - Verschwenken des Schaufelradauslegers (3) in einem weiteren Schwenkzyklus mit Bestimmung der Schwenkwinkelgeschwindigkeit ($\omega_{ist}$) über dem Schwenkwinkel ($\varphi$) und des sich auf dem Abförderer (5) einstellenden Massen-und/oder Volumentroms ($m_{ist}$, $v_{ist}$) über dem Schwenkwinkel ($\varphi$),
    - nach Abschluss dieses Schwenks Vorschubbewegung des Schaufelradbaggers mittels dessen Fahrwerks zum abzutragenden Gebirge hin mit Erfassung des realisierten Vorschubweges ($s_{n+1}$)
    - Vorgeben eines vorzugsweise konstanten gewünschten Soll-Massen-und/oder -Volumenstroms ($m_{soll}$, $v_{oll}$) auf dem Abförderer (5),
    - automatisches Korrigieren der im letzten Schwenkzyklus bestimmten Schwenkwinkelgeschwindigkeit ($\omega_{ist}$) in Abhängigkeit des Schwenkwinkels ($\varphi$) anhand des zuvor über dem Schwenkwinkel ($\varphi$) bestimmten Massen-und/oder Volumenstroms ($m_{ist}$, $v_{ist}$), des gewünschten Massen- und/oder Volumenstroms ($m_{soll}$, $v_{soll}$), des gerade zuvor realisierten Vorschubweges ($s_{n+1}$) und des vor dem letzten Schwenk realisierten Vorschubsweges ($s_n$), so dass der sich einstellende Massen-und/oder Volumenstroms ($m_{ist}$, $v_{ist}$) nahe beim gewünschten Soll-Massen- und/oder Volumenstroms ($m_{soll}$, $v_{soll}$) liegen wird, und
    - Verschwenken des Schaufelradauslegers (3) in einem weiteren Schwenkzyklus mit der korrigierten Schwenkwinkelgeschwindigkeit ($\omega_{soll}$) in Abhängigkeit des Schwenkwinkels ($\varphi$).

2. Verfahren nach dem vorhergehenden Anspruch, wobei beim Bestimmen des sich auf dem Abförderer (5) einstellenden Massen- und/oder Volumenstroms ($m_{ist}$, $v_{ist}$) über dem Schwenkwinkel ($\varphi$):

    - der Massen- und/oder Volumenstrom ($m_{ist}$, $v_{ist}$) am Abförderer (5) durch einen Massenstrom- und/oder Volumenstromsensor (16, 17) relativ zum Schwenkwinkel ($\varphi$) des Schaufelrads (2) erfasst wird,
    - eine Totzeit (T) zwischen einem Lösen des Materials einer Schaufel bis zum Erfassen dieses Materials am Abförderer (5) bestimmt wird, und
    - unter Berücksichtigung der bestimmten Schwenkwinkelgeschwindigkeit ($\omega_{ist}$) über dem Schwenkwinkel ($\varphi$) die Zuordnung des gemessenen Massen- und/oder Volumenstrom ($m_{ist}$, $v_{ist}$) zum Schwenkwinkel ($\varphi$) um die bestimmte Totzeit (T) korrigiert wird.

**3.** Verfahren nach dem vorhergehenden Anspruch, wobei zum Bestimmen der Totzeit (T) Geometrie, insbesondere eines Transportwegs, des Schaufelradbaggers vom Lösen des Materials einer Schaufel bis hin zu einem Massen- und/oder Volumenstromsensors (16,17) und der Kine-matik des Schaufelrades (2) sowie des Abförderers (5), insbesondere einer Schaufelraddrehzahl und einer Abförderergeschwindigkeit, ein Zeitversatz zwischen einer Laständerung des Schaufelrads (2) und/oder einer Änderung der Schaufelraddrehgeschwindigkeit einerseits und einer Signaländerung der Massenstrom- und/oder Volumenstromsensors (16, 17) andererseits bestimmt wird, wobei die genannte Laständerung und/oder Schaufelraddrehgeschwindigkeit durch eine Lastaufnahmesensorik (22) und/oder Schaufelraddrehzahlsensorik (23) gemessen wird.

**4.** Verfahren nach einem der beiden vorhergehenden Ansprüche, wobei die Totzeit (T) unter Berücksichtigung der Geometrie, insbesondere des Transportwegs, des Schaufelradbaggers vom Lösen das Materials einer Schaufel bis hin zu einem Massen- und/oder Volumenstromsensors (16,17) und der Kinematik des Schaufelrades (2) sowie des Abförderers, insbesondere einer Schaufelraddrehzahl und einer Abförderergeschwindigkeit bestimmt wird.

**5.** Verfahren nach einem der vorhergehenden Ansprüche, wobei durch einen Leistungsbegrenzer (26) eine Beladung des Abförderers (5) und/oder eine Belastung zumindest eines Antriebs des Schaufelradbaggers, insbesondere Schaufelradantriebs und/oder Abfördererantriebs, überwacht und die korrigierte Schwenkwinkelgeschwindigkeit ($\omega_{soll}$) begrenzt und/oder reduziert wird, wenn die Beladung des Abförderers (5) und/oder die Belastung des zumindest einen Antriebs eine Belastungsgrenze erreicht und/oder überschreitet.

**6.** Schaufelradbagger mit einem Schaufelrad (2), das rotierend antreibbar an einem Schaufelradausleger (3) gelagert ist, der um eine Schwenkachse (4) von einem Schwenkwerk verschwenkbar ist, sowie einer Steuervorrichtung (15) zum Steuern der Schwenkwinkelgeschwindigkeit ($\omega$) in Abhängigkeit eines Schwenkwinkels ($\varphi$), **dadurch gekennzeichnet, dass** die genannte Steuervorrichtung (15)

     - eine Bestimmungseinrichtung zum Bestimmen eines sich beim Verschwenken des Schaufelrads (2) mit einer vorgegebenen Schwenkwinkelgeschwindigkeit ($\omega_{ist}$) auf dem Abförderer (5) bei einem vorherigen Schwenkzyklus (n) einstellenden Massen- und/oder Volumentstroms ($m_{ist}$, $v_{ist}$) über dem Schwenkwinkel ($\varphi$),
     - Eingabemittel (24) zum Eingeben eines gewünschten Soll-Massen-und/oder -Volumen-

stroms ($m_{soll}$, $v_{soll}$) auf dem Abförderer (5)
     - Bestimmungsmittel zum Bestimmen des Vorschubweges (s) des Schaufelradbaggers zwischen zwei Schwenkvorgängen,
     - Bestimmungsmittel zum Bestimmen der Schwenkwinkelgeschwindigkeit ($\omega_{soll}$) in Abhängigkeit des gewünschten Soll-Massen- und/oder - Volumenstroms ($m_{soll}$, $v_{soll}$), wobei die genannten Bestimmungsmittel eine Kalibriereinrichtung (25) zum automatischen Korrigieren der zuvor vorgegebenen Schwenkwinkelgeschwindigkeit ($\omega_{ist}$) anhand des bestimmten Massen- und/oder Volumenstroms ($m_{ist}$, $v_{ist}$) und des gewünschten Massen- und/oder Volumenstroms ($m_{soll}$, $v_{soll}$) umfaßt, und
     - eine Schwenksteuereinrichtung zum Verschwenken des Schaufelrads (2) in einem weiteren Schwenkzyklus (n+1) mit der korrigierten Schwenkwinkelgeschwindigkeit ($\omega_{soll}$).

aufweist.

**7.** Schaufelradbagger nach dem vorhergehenden Anspruch, wobei die Eingabemittel (24) einen Auswahlbaustein zum variablen Auswählen des gewünschten Massen- und/oder Volumenstroms ($m_{soll}$, $v_{soll}$) aus einem Bereich zwischen einem minimal wählbaren Massen- und/oder Volumenstrom und einem maximal wählbaren Massen- und/oder Volumenstrom aufweisen.

**8.** Schaufelradbagger nach einem der beiden vorhergehenden Ansprüche, wobei die Bestimmungseinrichtung zum Bestimmen des sich beim Verschwenken des Schaufelrads (2) auf dem Abförderer (5) einstellenden Massen- und/oder Volumentstroms ($m_{ist}$, $v_{ist}$) über dem Schwenkwinkel ($\varphi$)

     - einen Massenstrom- und/oder Volumenstromsensor (16, 17) zum Erfassen des Massen- und/oder Volumenstrom ($m_{ist}$, $v_{ist}$) am Abförderer (5),
     - einen Schwenkwinkelsensor (18) zum Erfassen des Schwenkwinkels des Schaufelradauslegers (3), relativ zum Schwenkwinkel ($\varphi$) des Schaufelrads (2),
     - eine Vorschubsensorik zum Erfassen des Vorschubweges des Schaufelradbaggers zwischen zwei Schwenks mittels des Fahrwerks, und
     - eine Aufzeichnungseinrichtung (20) zum Aufzeichnen des erfassten Massen- und/oder Volumenstrom ($m_{ist}$, $v_{ist}$) am Abförderer (5) und des erfaßten Schwenkwinkels ($\varphi$) des Schaufelrads (2) aufweist.

**9.** Schaufelradbagger nach dem vorhergehenden Anspruch, wobei die Bestimmungseinrichtung zum Bestimmen des sich beim Verschwenken des Schaufelrads (2) auf dem Abförderer (5) einstellenden Massen- und/oder Volumentstroms ($m_{ist}$, $v_{ist}$) über dem Schwenkwinkel ($\varphi$)

- eine Totzeitbestimmungseinrichtung (21) zum Bestimmen einer Totzeit (T) zwischen einem Lösen des Materials einer Schaufel bis zum Erfassen dieses Materials am Abförderer (5), und
- eine Korrektureinrichtung zum Korrigieren der aufgezeichneten Zuordnung des gemessenen Massen- und/oder Volumenstrom ($m_{ist}$, $v_{ist}$) zum Schwenkwinkel ($\varphi$) um die bestimmte Totzeit (T) unter Berücksichtigung der vorgegebenen Schwenkwinkelgeschwindigkeit ($\omega_{ist}$) aufweist.

10. Schaufelradbagger nach dem vorhergehenden Anspruch, wobei die Totzeitbestimmungseinrichtung (21) dazu ausgebildet ist, einen Zeitversatz zwischen einer Laständerung des Schaufelrads (2) und/oder einer Änderung der Schaufelraddrehgeschwindigkeit einerseits und einer Signaländerung des Massenstrom- und/oder Volumenstromsensors (16, 17) andererseits anhand der Signale einer Lastaufnahmesensorik (22) zum Erfassen der Lastaufnahme des Antriebs des Schaufelrads (2) und/oder einer Schaufelraddrehzahlsensorik (23) zum Erfassen der Schaufelraddrehzehl einerseits und der Signale des Massenstrom- und/oder Volumenstromsensors (16, 17) andererseits zu bestimmen.

11. Schaufelradbagger nach einem der vorhergehenden Ansprüche, wobei die Totzeitbestimmungseinrichtung (21) dazu ausgebildet ist, die Totzeit (T) unter Berücksichtigung der Geometrie, insbesondere eines Transportwegs, des Schaufelradbaggers vom Lösen des Materials einer Schaufel bis hin zu einem Massen- und/oder Volumenstromsensor (16,17) und der Kinematik des Schaufelrades (2) sowie des Abförderers (5), insbesondere einer Schaufelraddrehzahl und einer Abförderergeschwindigkeit, zu bestimmen.

12. Schaufelradbagger nach einem der vorhergehenden Ansprüche, wobei der Steuervorrichtung (15) ein Leistungsbegrenzer (26) übergeordnet ist, der dazu ausgebildet ist, eine Beladung des Abförderers (5) und/oder eine Belastung zumindest eines Antriebs des Schaufelradbaggers, insbesondere Schaufelradantriebs und/oder Abfördererantriebs, zu überwachen und die korrigierte Schwenkwinkelgeschwindigkeit ($\omega_{soll}$) zu begrenzen und/oder zu reduzieren, wenn die Beladung des Abförderers (5) und/oder die Belastung des zumindest einen Antriebs eine Belastungsgrenze erreicht und/oder überschreitet.

**Claims**

1. A method of controlling a bucket wheel excavator (1) whose bucket wheel (2) rotating at a preferably constant speed is pivoted at an angle speed (w) over a pivot angle ($\varphi$) by means of a bucket wheel boom pivot drive and in so doing places removed material on a removal conveyor (5), comprising the following steps:

- after completion of a pivot over the pivot angle ($\varphi$) with material removal, an advance movement of the bucket wheel excavator by means of its undercarriage toward the rock mass to be removed with a detection of the implemented advance distance ($s_n$);
- pivoting the bucket wheel boom (3) in a further pivot cycle with a determination of the pivot angle speed ($\omega_{act}$) over the pivot angle ($\varphi$) and of the mass flow and/or volume flow (mact, $v_{act}$) adopted on the removal conveyor (5) over the pivot angle ($\varphi$);
- after completion of this pivot, an advance movement of the bucket wheel excavator by means of its undercarriage toward the rock mass to be removed with a detection of the implemented advance distance ($s_{n+1}$);
- specifying a preferably constant wanted desired mass flow and/or volume flow ($m_{des}$, $v_{des}$) on the removal conveyor (5);
- automatically correcting the pivot angle speed ($\omega_{act}$) determined in the last pivot cycle in dependence on the pivot angle ($\varphi$) using the mass flow and/or volume flow ($m_{act}$, $v_{act}$) previously determined over the pivot angle ($\varphi$), the desired mass and/or volume flow ($m_{des}$, $v_{des}$) ,the immediately previously implemented advance distance ($s_{n+1}$), and the advance distance ($s_n$) implemented before the last pivot so that the adopted mass flow and/or volume flow (mact, $v_{act}$) are close to the wanted desired mass flow and/or volume flow ($m_{des}$, $v_{des}$); and
- pivoting the bucket wheel boom (3) in a further pivot cycle at the corrected pivot angle speed ($\omega_{des}$) in dependence on the pivot angle ($\varphi$).

2. A method in accordance with the preceding claim, wherein on the determination of the mass flow and/or volume flow ($m_{act}$, $v_{act}$) adopted on the removal conveyor (5) over the pivot angle ($\varphi$):

- the mass flow and/or volume flow ($m_{act}$, $v_{act}$) at the removal conveyor (5) is detected by a mass flow and/or volume flow sensor (16, 17) relative to the pivot angle ($\varphi$) of the bucket wheel (2);
- a dead time (T) between a release of the material of a bucket up to the detection of this material at the removal conveyor (5) is determined; and

- while taking account of the determined pivot angle speed ($\omega_{act}$) over the pivot angle ($\varphi$), the association of the measured mass flow and/or volume flow ($m_{act}$, $v_{act}$) with the pivot angle ($\varphi$) is corrected by the determined dead time (T).

3. A method in accordance with the preceding claim, wherein, for the determination of the dead time (T), geometry, in particular of a transport path, of the bucket wheel excavator from the release of the material of a bucket up to a mass flow and/or volume flow sensor (16, 17) and of the kinematics of the bucket wheel (2) and of the removal conveyor (5), in particular a bucket wheel speed and a removal conveyor speed, a time offset between a load change of the bucket wheel (2) and/or a change of the rotational speed of the bucket wheel, on the one hand, and a signal change of the mass flow and/or volume flow sensor (16, 17), on the other hand, is determined with said load change and/or rotational speed of the bucket wheel being measured by a load pick-up sensor system (22) and/or by a rotational speed of the bucket wheel sensor system (23).

4. A method in accordance with one of the two preceding claims, wherein the dead time (T) is determined while taking account of the geometry, in particular of the transport path, of the bucket wheel excavator from the release of the material of a bucket up to a mass flow and/or volume flow sensor (16, 17), and of the kinematics of the bucket wheel (2) as well as of the removal conveyor, in particular of a rotational speed of a bucket wheel and a removal conveyor speed.

5. A method in accordance with one of the preceding claims, wherein a load of the removal conveyor (5) and/or a strain of at least one drive of the bucket wheel excavator, in particular of the bucket wheel drive and/or of the removal conveyor drive, is monitored by a power limiter (26) and the corrected pivot angle speed ($\omega_{des}$) is limited and/or reduced when the load of the removal conveyor (5) and/or the strain on the at least one drive reaches and/or exceeds a strain limit.

6. A bucket wheel excavator having a bucket wheel (2) that is supported in a rotationally drivable manner at a bucket wheel boom (3) that is pivotable about a pivot axis (4) by a pivot mechanism and having a control apparatus (15) for controlling the pivot angle speed (w) in dependence on a pivot angle ($\varphi$), **characterized in that** said control apparatus (15) comprises

- a determination device for determining a mass flow and/or volume flow ($m_{act}$, $v_{act}$) adopted on the pivoting of the bucket wheel (2) at a specified pivot angle speed ($\omega_{act}$) on the removal conveyor (5) in a preceding pivot cycle (n) over the pivot angle ($\varphi$);
- input means (24) for inputting a wanted desired mass flow and/or volume flow ($m_{des}$, $v_{des}$) on the removal conveyor (5);
- determination means for determining the advance distance (s) of the bucket wheel excavator between two pivot procedures;
- determination means for determining the pivot angle speed $\omega_{des}$) in dependence on the wanted desired mass flow and/or volume flow ($m_{des}$, $v_{des}$), with said determination means comprising a calibration device (25) for an automatic correction of the previously specified pivot angle speed ($\omega_{act}$) using the determined mass flow and/or volume flow ($m_{act}$, $v_{act}$) and the desired mass and/or volume flow ($m_{des}$, $v_{des}$); and
- a pivot control device for pivoting the bucket wheel (2) in a further pivot cycle at the corrected pivot angle speed ($\omega_{des}$).

7. A bucket wheel excavator in accordance with the preceding claim, wherein the input means (24) have a selection module for a variable selection of the desired mass flow and/or volume flow ($m_{des}$, $v_{des}$) from a range between a mass flow and/or volume flow selectable as a minimum and a mass flow and/or volume flow selectable as a maximum.

8. A bucket wheel excavator in accordance with one of the two preceding claims, wherein the determination device for determining the mass flow and/or volume flow ($m_{act}$, $v_{act}$) adopted on the removal conveyor (5) over the pivot angle ($\varphi$) on the pivoting of the bucket wheel (2) comprises

- a mass flow and/or volume flow sensor (16, 17) for detecting the mass flow and/or volume flow ($m_{act}$, $v_{act}$) at the removal conveyor (5);
- a pivot angle sensor (18) for detecting the pivot angle of the bucket wheel boom (3) relative to the pivot angle ($\varphi$) of the bucket wheel (2);
- an advance sensor system for detecting the advance distance of the bucket wheel excavator between two pivots by means of the undercarriage; and
- a recording device (20) for recording the detected mass flow and/or volume flow ($m_{act}$, $v_{act}$) at the removal conveyor (5) and the detected pivot angle ($\varphi$) of the bucket wheel (2).

9. A bucket wheel excavator in accordance with the preceding claim, wherein the determination device for determining the mass flow and/or volume flow ($m_{act}$, $v_{act}$) adopted on the removal conveyor (5) over the pivot angle ($\varphi$) on the pivoting of the bucket wheel (2) comprises

- a dead time determination device (21) for determining a dead time (T) between a release of the material of a bucket up to the detection of this material at the removal conveyor (5); and
- a correction means for correcting the recorded association of the measured mass flow and/or volume flow ($m_{act}$, $v_{act}$) with the pivot angle ($\varphi$) by the determined dead time (T) while taking account of the specified pivot angle speed ($\omega_{act}$).

**10.** A bucket wheel excavator in accordance with the preceding claim, wherein the dead time determination device (21) is configured to determine a time offset between a load change of the bucket wheel (2) and/or a change of the rotational speed of the bucket wheel, on the one hand, and a signal change of the mass flow and/or volume flow sensor (16, 17), on the other hand, using the signals of a load pick-up sensor system (22) for detecting the load pick-up of the drive of the bucket wheel (2) and/or a bucket wheel speed sensor system (23) for detecting the bucket wheel speed, on the one hand, and the signals of the mass flow and/or volume flow sensor (16, 17), on the other hand.

**11.** A bucket wheel excavator in accordance with one of the preceding claims, wherein the dead time determination device (21) is configured to determine the dead time (T) while taking account of the geometry, in particular of a transport path, of the bucket wheel excavator from the release of the material of a bucket up to a mass flow and/or volume flow sensor (16, 17), and of the kinematics of the bucket wheel (2) as well as of the removal conveyor (5), in particular of a bucket wheel speed and a removal conveyor speed.

**12.** A bucket wheel excavator in accordance with one of the preceding claims, wherein a power limiter (26) is superposed on the control apparatus (15) and is configured to monitor a load of the removal conveyor (5) and/or a strain of at least one drive of the bucket wheel excavator, in particular the bucket wheel drive and/or the removal conveyor drive, and to limit and/or reduce the corrected pivot angle speed ($\omega_{des}$) when the load of the removal conveyor (5) and/or the strain on the at least one drive reaches and/or exceeds a strain limit.

**Revendications**

**1.** Procédé pour commander une excavatrice à godets (1), dont la roue à godets (2) tournant à une vitesse de rotation de préférence constante est pivotée au moyen d'un entraînement en pivotement de flèche de roue à godets avec une vitesse angulaire ($\omega$) selon un angle de pivotement ($\varphi$) et dépose ce faisant de la matière enlevée sur un convoyeur (5), comprenant les étapes suivantes :

- après la fin d'un pivotement selon l'angle de pivotement ($\varphi$) avec enlèvement de matière, mouvement d'avance de l'excavatrice à godets au moyen de son mécanisme de déplacement vers la roche à enlever, avec détection de la course d'avance ($s_n$) réalisée
- pivotement de la flèche de roue à godets (3) dans un autre cycle de pivotement, avec détermination de la vitesse angulaire de pivotement ($\omega_{eff}$) sur l'angle de pivotement ($\varphi$) et du débit massique et/ou volumétrique ($m_{eff}$, $v_{eff}$) se réglant sur le convoyeur (5) sur l'angle de pivotement ($\varphi$),
- après la fin de ce pivotement, mouvement d'avance de l'excavatrice à godets au moyen de son mécanisme de déplacement vers la roche à enlever, avec détection de la course d'avance ($s_{n+1}$) réalisée
- prédéfinition d'un débit massique et/ou volumétrique de consigne ($m_{cons}$, $v_{cons}$) souhaité de préférence constant sur le convoyeur (5),
- correction automatique de la vitesse angulaire de pivotement ($\omega_{eff}$) déterminée lors du dernier cycle de pivotement en fonction de l'angle de pivotement ($\varphi$) sur la base du débit massique et/ou volumétrique ($m_{eff}$, $v_{eff}$) déterminé auparavant sur l'angle de pivotement ($\varphi$), du débit massique et/ou volumétrique ($m_{cons}$, $v_{cons}$) souhaité, de la course d'avance ($s_{n+1}$) réalisée à l'instant et de la course d'avance ($s_n$) réalisée avant le dernier pivotement, de telle sorte que le débit massique et/ou volumétrique ($m_{eff}$, $v_{eff}$) se réglant est proche du débit massique et/ou volumétrique de consigne ($m_{cons}$, $v_{cons}$) souhaité, et
- pivotement de la flèche de roue à godets (3) dans un autre cycle de pivotement avec la vitesse angulaire de pivotement ($\omega_{cons}$) corrigée en fonction de l'angle de pivotement ($\varphi$).

**2.** Procédé selon la revendication précédente, dans lequel, lors de la détermination du débit massique et/ou volumétrique ($m_{eff}$, $v_{eff}$) se réglant sur le convoyeur (5) sur l'angle de pivotement ($\varphi$) :

- le débit massique et/ou volumétrique ($m_{eff}$, $v_{eff}$) sur le convoyeur (5) est détecté par un capteur de débit massique et/ou volumétrique (16, 17) par rapport à l'angle de pivotement ($\varphi$) de la roue à godets (2),
- un temps mort (T) entre un détachement de la matière d'un godet et la détection de cette matière sur le convoyeur (5) est déterminé, et

- en tenant compte de la vitesse angulaire de pivotement ($\omega_{eff}$) déterminée sur l'angle de pivotement ($\varphi$), l'association entre le débit massique et/ou volumétrique ($m_{eff}$, $v_{eff}$) mesuré et l'angle de pivotement ($\varphi$) est corrigée selon le temps mort (T) déterminé.

3. Procédé selon la revendication précédente, dans lequel, pour la détermination du temps mort (T), la géométrie, en particulier d'une course de transport, de l'excavatrice à godets, du détachement de la matière d'un godet à un capteur de débit massique et/ou volumétrique (16, 17), et de la cinématique de la roue à godets (2) ainsi que du convoyeur (5), en particulier d'une vitesse de rotation de roue à godets et d'une vitesse de convoyeur, un décalage temporel, entre une modification de la charge de la roue à godets (2) et/ou une modification de la vitesse de rotation de roue à godets d'une part et une modification de signal du capteur de débit massique et/ou volumétrique (16, 17) d'autre part, est déterminé, ladite modification de la charge et/ou vitesse de rotation de roue à godets étant mesurée par un système de capteurs de charge absorbée (22) et/ou un système de capteurs de vitesse de rotation de roue à godets (23).

4. Procédé selon l'une des deux revendications précédentes, dans lequel le temps mort (T) est déterminé en tenant compte de la géométrie, en particulier de la course de transport, de l'excavatrice à godets, du détachement de la matière d'un godet à un capteur de débit massique et/ou volumétrique (16, 17), et de la cinématique de la roue à godets (2) ainsi que du convoyeur, en particulier d'une vitesse de rotation de roue à godets et d'une vitesse de convoyeur.

5. Procédé selon l'une des revendications précédentes, dans lequel un chargement du convoyeur (5) et/ou un effort d'au moins un entraînement de l'excavatrice à godets, en particulier d'un entraînement de roue à godets et/ou d'un entraînement de convoyeur, est surveillé par un limiteur de puissance (26) et la vitesse angulaire de pivotement ($\omega_{cons}$) corrigée est limitée et/ou réduite quand le chargement du convoyeur (5) et/ou l'effort de l'au moins un entraînement atteint et/ou dépasse une limite d'effort.

6. Excavatrice à godets comprenant une roue à godets (2), qui est montée sur une flèche de roue à godets (3) de manière à pouvoir être entraînée en rotation, ladite flèche de roue à godets pouvant être pivotée autour d'un axe de pivotement (4) par un mécanisme de pivotement, ainsi qu'un dispositif de commande (15) pour commander la vitesse angulaire de pivotement ($\omega$) en fonction d'un angle de pivotement ($\varphi$), **caractérisée en ce que** ledit dispositif de commande (15) comporte

- un dispositif de détermination pour déterminer un débit massique et/ou volumétrique ($m_{eff}$, $v_{eff}$) se réglant sur le convoyeur (5) lors du pivotement de la roue à godets (2) avec une vitesse angulaire de pivotement ($\omega_{eff}$) prédéfinie lors d'un cycle de pivotement précédent (n) sur l'ange de pivotement ($\varphi$),

- des moyens d'entrée (24) pour entrer un débit massique et/ou volumétrique de consigne ($m_{cons}$, $v_{cons}$) souhaité sur le convoyeur (5)

- des moyens de détermination pour déterminer la course d'avance (s) de l'excavatrice à godets entre deux processus de pivotement,

- des moyens de détermination pour déterminer la vitesse angulaire de pivotement ($\omega_{cons}$) en fonction du débit massique et/ou volumétrique de consigne ($m_{cons}$, $v_{cons}$) souhaité, lesdits moyens de détermination comprenant un dispositif de calibrage (25) pour la correction automatique de la vitesse angulaire de pivotement ($\omega_{eff}$) auparavant prédéfinie sur la base du débit massique et/ou volumétrique ($m_{eff}$, $v_{eff}$) déterminé et du débit massique et/ou volumétrique ($m_{cons}$, $v_{cons}$) souhaité, et

- un dispositif de commande de pivotement pour pivoter la roue à godets (2) dans un autre cycle de pivotement (n+1) avec la vitesse angulaire de pivotement ($\omega_{cons}$) corrigée.

7. Excavatrice à godets selon la revendication précédente, dans laquelle les moyens d'entrée (24) comportent un composant de sélection pour la sélection variable du débit massique et/ou volumétrique ($m_{cons}$, $v_{cons}$) souhaité dans une plage allant d'un débit massique et/ou volumétrique minimal pouvant être sélectionné à un débit massique et/ou volumétrique maximal pouvant être sélectionné.

8. Excavatrice à godets selon l'une des deux revendications précédentes, dans laquelle le dispositif de détermination pour déterminer le débit massique et/ou volumétrique ($m_{eff}$, $v_{eff}$) se réglant sur le convoyeur (5) lors du pivotement de la roue à godets (2) sur l'angle de pivotement ($\varphi$) comporte

- un capteur de débit massique et/ou volumétrique (16, 17) pour détecter le débit massique et/ou volumétrique ($m_{eff}$, $v_{eff}$) sur le convoyeur (5),

- un capteur d'angle de pivotement (18) pour détecter l'angle de pivotement de la flèche de roue à godets (3), par rapport à l'angle de pivotement ($\varphi$) de la roue à godets (2),

- un système de capteurs d'avance pour détecter la course d'avance de l'excavatrice à godets entre deux pivotements au moyen du mécanisme de déplacement, et

- un dispositif d'enregistrement (20) pour enregistrer le débit massique et/ou volumétrique ($m_{eff}$, $v_{eff}$) détecté sur le convoyeur (5) et l'angle de pivotement ($\varphi$) détecté de la roue à godets (2).

9. Excavatrice à godets selon la revendication précédente, dans laquelle le dispositif de détermination pour déterminer le débit massique et/ou volumétrique ($m_{eff}$, $v_{eff}$) se réglant sur le convoyeur (5) lors du pivotement de la roue à godets (2) sur l'angle de pivotement ($\varphi$) comporte

    - un dispositif de détermination de temps mort (21) pour déterminer un temps mort (T) entre un détachement de la matière d'un godet et la détection de cette matière sur le convoyeur (5), et
    - un dispositif de correction pour corriger l'association enregistrée entre le débit massique et/ou volumétrique ($m_{eff}$, $v_{eff}$) mesuré et l'angle de pivotement ($\varphi$) selon le temps mort (T) déterminé en tenant compte de la vitesse angulaire de pivotement ($\omega_{eff}$) prédéfinie.

10. Excavatrice à godets selon la revendication précédente, dans laquelle le dispositif de détermination de temps mort (21) est conçu pour déterminer un décalage temporel entre une modification de la charge de la roue à godets (2) et/ou une modification de la vitesse de rotation de roue à godets d'une part et une modification de signal du capteur de débit massique et/ou volumétrique (16, 17) d'autre part sur la base des signaux d'un système de capteurs de charge absorbée (22) pour détecter la charge absorbée par l'entraînement de la roue à godets (2) et/ou d'un système de capteurs de vitesse de rotation de roue à godets (23) pour détecter la vitesse de rotation de roue à godets d'une part et des signaux du capteur de débit massique et/ou volumétrique (16, 17) d'autre part.

11. Excavatrice à godets selon l'une des revendications précédentes, dans laquelle le dispositif de détection de temps mort (21) est conçu pour déterminer le temps mort (T) en tenant compte de la géométrie, en particulier d'une course de transport, de l'excavatrice à godets, du détachement de la matière d'un godet à un capteur de débit massique et/ou volumétrique (16, 17), et de la cinématique de la roue à godets (2) ainsi que du convoyeur (5), en particulier d'une vitesse de rotation de roue à godets et d'une vitesse de convoyeur.

12. Excavatrice à godets selon l'une des revendications précédentes, dans laquelle le dispositif de commande (15) est soumis à un limiteur de puissance (26), qui est conçu pour surveiller un chargement du convoyeur (5) et/ou un effort d'au moins un entraînement de l'excavatrice à godets, en particulier d'un entraînement de roue à godets et/ou d'un entraînement de convoyeur, et limiter et/ou réduire la vitesse angulaire de pivotement ($\omega_{cons}$) corrigée quand le chargement du convoyeur (5) et/ou l'effort de l'au moins un entraînement atteint et/ou dépasse une limite d'effort.

Fig. 1

Seitenböschung

Arbeitsböschung

φ

2.2

2.1

13

Spur der Baggerachse

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0412399 A1
- DE 19726554 C2
- JP S5598029 A
- WO 2014040137 A1